# EUROPEAN PATENT APPLICATION

(11) **EP 4 823 067 A1**
(43) Date of publication of application: **14.10.2026**
(21) Application number: 26170962.0
(22) Date of filing: 07.04.2026
(51) Int. Cl.: H04L 65/612, H04L 65/80

(54) **LOW LATENCY ELIGIBILITY**

(30) Priority: 08.04.2025 IT 202500007611
(71) Applicant: Sky Italia S.r.L., 20138 Milano (IT)
(72) Inventor: BERTOLOTTI, Massimo, 20138 Milano (IT); MAZZEO, Gaetano, 20138 Milano (IT)
(74) Representative: Hoffmann Eitle

(57) **Abstract**

Method for distributing an audiovisual streaming content in at least two modes via a communication network, wherein a first mode of the at least two modes allows a low latency relative to a second mode of the at least two modes, wherein the method comprises the steps of: obtaining a request related to an audiovisual content from a user, wherein the request includes an identifier associated with a user; determining, based on the identifier associated with the user and telemetry data obtained in a past period, if the user is eligible to receive the content with a low latency; and transmitting a response to the request, the response indicating an address where the audiovisual content is available, in which: in case the user is determined to be eligible to receive the content with the low latency, the response indicates the first mode, and otherwise, the response indicates the second mode.

## Description

### FIELD OF THE INVENTION

The present invention relates to methods, network devices, system and a computer program for distributing an audiovisual streaming content that allows a low latency for some users.

### BACKGROUND OF THE INVENTION

Streaming audiovisual contents are distributed via a live playback communication network. The experience of the user that receives a content depends on the quality of the content received and on the latency to obtain it, both dependent on the availability and stability of the bandwidth available for transmission of the content between the user and the content distributor.

There are systems called adaptive streaming (or *Adaptive Bitrate Streaming, ABR*) that dynamically modifies the bitrate at which the content is transmitted according to the bandwidth available at every instant, to provide the best possible quality regardless of the stability of the bandwidth, having as a disadvantage a deterioration of latency. To counteract this effect, a so-called Low Latency technique can be used in the transmission of content to a user.

### SUMMARY OF THE INVENTION

However, the Low Latency techniques can deteriorate the user experience (or at least not improve it). For example, if the user receives the content through a link with a limited and/or unstable bandwidth, part of the content transmitted according to a Low Latency technique could not reach the user in time, causing a buffering or interruption in the playback of the content.

The inventors have determined how to identify a user who can obtain the content with a low latency without a deterioration of the user experience. The object of the present invention is to determine to which user to provide a content with a low latency without deteriorating the user experience.

The object is achieved by the independent claims. Advantageous embodiments are defined by the dependent claims. Furthermore, aspects are provided for explanatory purposes as follows:
A1. Method for distributing an audiovisual streaming content in at least two modes via a communication network, wherein a first mode of the at least two modes allows a low latency relative to a second mode of the at least two modes, wherein the method comprises the steps of:
   obtaining a request related to the audiovisual content from a user, wherein the request includes an identifier associated with a user;
   determining, based on the identifier associated with the user and telemetry data obtained in a past period, if the user is eligible to receive the content with a low latency; and
   transmitting a response to the request, the response indicating an address where the audiovisual content is available, in which:
      in case the user is determined to be eligible to receive the content with the low latency, the response indicates the first mode, and
      otherwise, the response indicates the second mode.
A2. Method according to aspect A1, wherein the telemetry data are used in a determination of a risk of deterioration in a quality of service associated with a transmission of the audiovisual content in the first mode, and wherein the user is determined to be eligible to receive the content in the first of the at least two modes if the risk remains below a certain threshold.
A3. Method according to aspect A1 or A2, wherein the telemetry data include first data and second data, wherein the first data indicate a current condition of the network, and wherein the second data indicate a historical condition of the network, and/or
   wherein the telemetry data are based on data related to previous requests from the user for audiovisual contents.
A4. Method according to any one of the preceding aspects, wherein the telemetry data include at least one of:
   - data related to one or more network metrics associated with the user; and
   - data related to a state of a buffer for the playback of audiovisual contents.
A5. Method according to aspect A4, wherein the data related to the state of the buffer corresponds to a first time frame that is immediate past and/or the data related to the one or more network metrics correspond to a second time frame, wherein the second time frame comprises the first time frame.
A6. Method according to any one of the preceding aspects, wherein the audiovisual content is transmitted via a linear streaming channel, wherein preferably the audiovisual content is a live content.
A7. Method according to any one of the preceding aspects, wherein the address corresponds to a distribution network in which the audiovisual content is available in said at least two modes.
A8. Method according to any one of the preceding aspects, wherein the response directs the user towards a distribution network in which the audiovisual content is available in said at least two modes (the response is transmitted outside the distribution network).
A9. Method according to any one of the preceding aspects, wherein: the response indicates one of a first network address associated with the first mode, and a second network address associated with the second mode, wherein the second network address is preferably different from the first network address.
A10. Method according to aspect A9, wherein the first address and the second address are associated with a same distribution network that provides the audiovisual content,
   wherein, preferably, the telemetry data are obtained from the distribution network.
A11. Method according to any one of the preceding aspects, wherein the telemetry data are obtained based on Common Media Client Data, CMCD, messages exchanged between the user and a distribution network that provides the audiovisual content.
A12. Method for distributing an audiovisual streaming content available in at least two modes via a communication network, wherein a first mode of the at least two modes allows a low latency relative to a second mode of the at least two modes, wherein the method comprises the steps of:
   receiving from a user, a request related to the audiovisual content, wherein the request includes an identifier associated with a user;
   transmitting, to a network device, a request for eligibility to receive the audiovisual content with a low latency, wherein the request for eligibility includes the identifier associated with the user;
   receiving a response indicating whether the user is eligible;
   transmitting to the user a response indicating a network address, wherein the indicated network address is:
      a first address associated with the first mode if the response indicates that the user is eligible to receive the audiovisual content with a low latency, or
      a second address associated with the second mode otherwise.
A13. Method according to aspect A12, wherein the response to the request for eligibility is based on the identifier associated with the user and on the telemetry data obtained in a past period.
A14. Method according to aspect A13, wherein the telemetry data are used in a determination of a risk of deterioration in a quality of service associated with a transmission of the audiovisual content in the first mode, and wherein the user is determined to be eligible to receive the content in the first of the at least two modes if the risk remains below a certain threshold.
A15. Method according to aspect A13 or A14, wherein the telemetry data include first data and second data, wherein the first data indicate a current condition of the network, and wherein the second data indicate a historical condition of the network, and/or
   wherein the telemetry data are based on data related to previous requests from the user for audiovisual contents.
A16. Method according to any one of the aspects A13 to A15, wherein the telemetry data include at least one of:
   - data related to one or more network metrics associated with the user; and
   - data related to a state of a buffer for the playback of audiovisual contents.
A17. Method according to aspect A16, wherein the data related to the state of the buffer corresponds to a first time frame that is immediate past and/or the data related to the one or more network metrics correspond to a second time frame, wherein the second time frame comprises the first time frame.
A18. Method according to any one of aspects A12 to A17, wherein the audiovisual content is transmitted via a linear streaming channel, wherein preferably the audiovisual content is a live content.
A19. Method according to any one of aspects A12 to A18, wherein the address corresponds to a distribution network in which the audiovisual content is available in said at least two modes.
A20. Method according to any one of aspects A12 to A19, wherein the response directs the user towards a distribution network in which the audiovisual content is available in said at least two modes (the response is transmitted outside the distribution network).
A21. Method according to any one of aspects A12 to A20, wherein the first address and the second address are associated with a same distribution network that provides the audiovisual content.
A22. Method according to aspect A21, wherein the telemetry data are obtained from the distribution network.
A23. Method according to any one of aspects A12 to A22, wherein the telemetry data are obtained based on Common Media Client Data, CMCD, messages exchanged between the user and a distribution network that provides the audiovisual content.
A24. Method according to any one of the preceding aspects, wherein said at least two modes are audiovisual streaming content transmission modes,
   wherein, preferably, said at least two modes are configured independently of the audiovisual content.
A25. Method according to any one of the preceding aspects, wherein each of said at least two modes is a mode for distributing each of a plurality of audiovisual contents.
A26. Method according to any one of the preceding aspects, wherein the first mode is associated with a division of the audiovisual content into a plurality of first blocks and the second mode is associated with a division of the audiovisual content into a plurality of second blocks, wherein each second block has a longer duration than a respective first block.
A27. Method according to aspect A26, wherein each first block has a duration of less than one second, preferably 500 milliseconds or less.
A28. Method according to aspect A26 or A27, wherein each second block has a duration of more than one second, preferably 2 seconds or more.
A29. Method according to any one of the preceding aspects, wherein the audiovisual content is distributed according to an adaptive streaming.
A30. Method according to any one of the preceding aspects, wherein at least one, and preferably all three, of the steps of obtaining the request related to the audiovisual content, determining the eligibility to receive the content with a low latency and transmitting the response to the request is/are carried out in the absence of communication between the user and the distribution network for the audiovisual content.
A31. Network device for distributing an audiovisual streaming content in at least two modes via a communication network, wherein a first mode of the at least two modes allows a low latency relative to a second mode of the at least two modes, wherein the device comprises:
   an interface configured to obtain a request related to an audiovisual content from a user, wherein the request includes an identifier associated with a user; and
   a controller configured to determine, based on the identifier associated with the user and telemetry data obtained in a past period, if the user is eligible to receive the content with a low latency;
   wherein the interface is configured to transmit a response to the request, the response indicating an address where the audiovisual content is available, in which:
      in case the user is determined to be eligible to receive the content with the low latency, the response indicates the first mode, and
      otherwise, the response indicates the second mode.
A32. Network device, preferably the network device according to aspect A31, configured to execute the method according to any one of aspects A1 to A11, or according to any one of aspects A24 to A30.
A33. Network device for distributing an audiovisual streaming content available in at least two modes via a communication network, wherein a first mode of the at least two modes allows a low latency relative to a second mode of the at least two modes, wherein the device comprises:
   an interface for communicating with a user and with a second network device, wherein the interface is configured to:
   receiving from a user, a request related to the audiovisual content, wherein the request includes an identifier associated with a user;
   transmit, to the second network device, a request for eligibility to receive the audiovisual content with a low latency, wherein the request for eligibility includes the identifier associated with the user;
   receive a response indicating if the user is eligible; and
   transmit to the user a response indicating a network address,
   wherein the indicated network address is:
      a first address associated with the first mode if the response indicates that the user is eligible to receive the audiovisual content with a low latency, or
      a second address associated with the second mode otherwise.
A34. Network device, preferably the network device according to aspect A33, configured to execute the method according to any one of aspects A12 to A30.
A35. System comprising:
   a first network device according to aspect A31 or A32; and
   a second network device according to aspect A33 or A34.
A36. System according to aspect A35, wherein the system further comprises:
   at least one user device each configured to request and receive an audiovisual content; and
   a distribution network configured to provide the audiovisual content in the first mode and in the second mode.
A37. System according to aspect A35 or A36, wherein the system further comprises a third network device configured to:
   receive an initial request from the user for the audiovisual content;
   determine if the requested audiovisual content is distributed in the first mode and in the second mode; and
   direct the user:
      towards the second network device if the audiovisual content is distributed in the first mode and in the second mode or
      towards the distribution network if the audiovisual content is not distributed in the first mode or is not distributed in the second mode.
A38. Computer program comprising instructions designed to carry out, when said program is run on one or more processors, all the steps according to any one of aspects A1 to A30.

### LIST OF FIGURES

Figure 1 depicts a flowchart of a method according to an embodiment of the present invention;
Figure 2 depicts an example of telemetry data;
Figure 3 depicts a flowchart of a method according to an embodiment of the present invention;
Figure 4 depicts a block diagram of a system according to an embodiment of the present invention;
Figure 5 depicts a block diagram of a data processing device capable of implementing the present invention according to an embodiment.

### DETAILED DESCRIPTION

### Figure 1

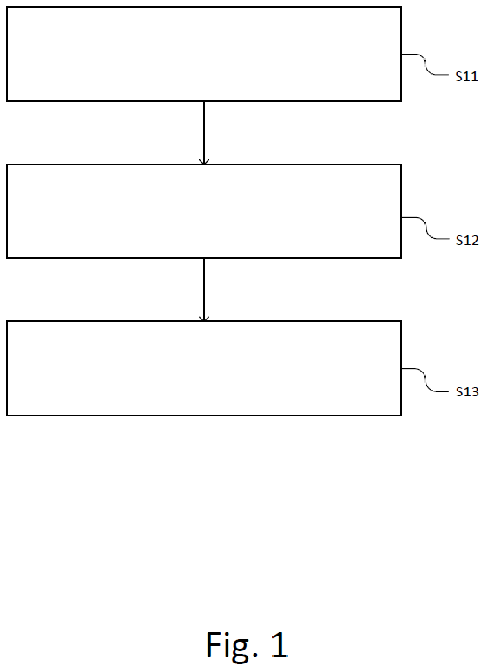

A first embodiment of the present invention will now be described with reference to figure 1, in which a flowchart of a method is illustrated.

Various types of protocol are typically used in the distribution of audiovisual streaming contents over a communication network, such as Dynamic Adaptive Streaming over HTTP (DASH) or HTTP Live Streaming (HLS). Each protocol defines how a content is divided into blocks for transmission to the user.

In the description, communications are described as being made with the user (e.g. user requests, the user receives/transmits, etc.). However, such formulations are used for the sake of simplicity and it is intended that communications are made with a device associated with the user (the device that would play the content or that would obtain the content for playback by another device for the user).

Several protocols have been defined that allow a low latency relative to a normal distribution of the streaming content, for example protocols based on the Collaborative Media Application Format (CMAF), which divides the contents into smaller blocks. The term "content block" may correspond, for example, to a chunk, fragment or segment as described in the CMAF, or, according to other similar examples, to parts of the content that can be transmitted and/or processed independently of each other.

This speeds up the generation of each block and makes them available to the users. The Low-Latency HLS and Low-Latency DASH (i.e. LL-DASH) protocols are examples of distribution modes that allow a low latency relative to a distribution by using the HLS or DASH protocol, respectively.

The same audiovisual content can be available for distribution both through a mode that allows a low latency (i.e. Low-Latency or LL mode) and a "normal" mode (i.e. non-LL).

However, using the LL mode can deteriorate the user experience, for example if a user is connected via an unstable link or encounters a reduction in available bandwidth.

Latency can be defined as the delay between a first moment in which a block of data that contains (encapsulates) a portion of the content is transmitted towards the user and a second moment in which the block is received by the user. Latency may also be defined as including the delay on the distributor side to generate a block of the content, and/or of the delay occurring from the production of the part of the content (e.g. when the sequence of images corresponding to the part of the content is taken and/or when the audio corresponding to the part of the content is captured) to the making available and transmission of the block towards the user and/or the delay on the user side between the reception of the part of the content and its playback.

The method illustrated in figure 1 assists in the distribution of audiovisual contents by allowing to choose to which user to provide the audiovisual content with a low latency without a deterioration of the user experience.

The method comprises step S11 of obtaining a request related to the audiovisual content from a user, wherein the request includes an identifier associated with a user.

To obtain the content, the user transmits a request related to the audiovisual content. This request includes, for example, an identifier to indicate which user requests the audiovisual content. Such identifier may be for example a network (IP, MAC) address associated with the user (or associated with a device of the user, for example the device for playing the audiovisual content or a network device associated with the user), an identifier of a client account for access to the audiovisual contents, etc., and may be entered or indicated in the transmissions with the user to determine where to transmit responses (for example the value of one or more parameters/data used in the transmissions that may be associated with the client account, such as a network port number, a pair of TCP sockets, credentials, tokens used to authenticate the client, a session identifier, etc.).

In a specific example, the communication between the user and the distribution network may be based on the Common Media Client Data, CMCD, protocol. A session identifier, CMCD-Session (sid), is included in CMCD transmissions and remains the same for each request to block the same audiovisual content. Even if the session identifier changes for each audiovisual content requested by the same user, they are all associated with the user (that is, the same user who requests it). Note that the use of the CMCD protocol or of the session identifier are provided as illustrative examples. Any other identifier that can be associated with the user can instead be used and with which the subsequent requests received from the same user can be considered together. The request is not necessarily obtained directly from the user device and can be routed/forwarded by one or more intermediaries.

The method comprises the step S12 of determining, based on the identifier associated with the user and telemetry data obtained in a past period, if the user is eligible to receive the content with a low latency.

From the telemetry data obtained in the past period, it can be estimated if the use of the mode that allows a low latency to transmit the audiovisual content presents a risk of deteriorating the user experience. Past period means a period (interval) of time that begins at an instant of time prior to the one in which the estimate is made or it is determined if the user is eligible; this period may end before or at the instant of time in which the estimate is made or in which it is determined if the user is eligible. In case the determination is performed several times, the past period corresponding to each determination may be different. In other words, each determination can be based on the telemetry data obtained in a different past period (for example if the determination is repeated every 5 minutes and that the telemetry data are those obtained in the last 15 minutes prior to the instant of time in which the determination is made, the past period advances by 5 minutes at each determination).

The telemetry data may include data obtained based on the transmission of audiovisual streaming contents in the past (as to the past, see above what has been said with regards to the past period), from the distribution network towards one or more users (including the user associated with the identifier or not). Such telemetry data may be measured/collected at one or more distinct points, e.g. from user devices for playback of the audiovisual content, and/or from network devices associated with the users (e.g. set-top-boxes, routers) and/or from network devices. The telemetry data can be grouped into a central database.

In a first example, the telemetry data may be processed to determine a state of the distribution network and/or of the connection between the distribution network of the audiovisual content and the user associated with the identifier. The state of the distribution network may indicate a level of bandwidth instability between the distribution network and the user that risks causing a loss of data packages causing a rebuffering during the playback of the audiovisual content, which would deteriorate the user experience.

In a second example, the telemetry data may be processed to identify various situations where the use of the transmission mode that allows low latency has caused an increase in playback interruptions, e.g., an increase in rebuffering events, and/or an increase in repeated requests for the same block of the audiovisual content from the same user, and/or an increase in the number of lost data packages, etc. For example, the telemetry data may indicate a recurring period of high network load. It can be determined that the use of the mode that allows a low latency during this period of high network load (which is expected to occur again based on the detected recurrence) increases the risk of interruptions in the playback of the audiovisual content.

Following the specific example provided above, each CMCD package transmitted between users and the distribution network for distributing audiovisual contents may be collected (e.g. from the distribution network receiving the CMCD requests from the users or from an intermediate device between the user and the distribution network forwarding the CMCD requests). The CMCD packages can be processed to determine the occurrence of various events that indicate a deterioration of the user experience.

In one example, the telemetry data may include one or more of: a measurement of the instantaneous and/or average bitrate of one or more audiovisual services and/or data services received from a device; information on rebuffering such as a number of rebuffering occurrences, a quantity of rebuffered data; information on a number of network failures; information on a video service startup time; information on a number of maximum/average concurrent sessions; information on a number of failed sessions; information on a most requested CDN; information on video failures; information on a video startup time; information on an instantaneous bandwidth throughput.

Based on the telemetry data obtained, it can be determined if the use of the mode that allows a low latency can deteriorate the user experience. For example, the telemetry data obtained from the past period and the identifier associated with the user may be input into an artificial intelligence (and/or machine learning) algorithm configured to provide, as output, a value indicative of a risk of deteriorating the user experience or an indication of the transmission mode to be used for the user in transmitting the audiovisual content. Any type of machine learning algorithm may be used, for example one or more artificial neural networks, a k-nearest neighbor (kNN), Support Vector Machine (SVM), linear regression algorithm, as well as other types of classifiers or other types of algorithms. Such algorithms may be trainable, trained, semi-trained, trainable or non-trainable (static). Any type of suitable training may be used for training in the case of a trainable algorithm, based on data obtained in the past, e.g. telemetry data and/or measured variations in network conditions and/or in the user experience when an audiovisual content has been provided with a low latency.

The method comprises the step S13 of transmitting a response to the request, the response indicating an address where the audiovisual content is available.

In case the user is determined to be eligible to receive the content with the low latency, the response indicates the first mode of the audiovisual content. Otherwise, the response indicates the second mode. In other words, if the user is eligible, the response indicates the first mode (e.g., an LL mode) of the audiovisual content, otherwise the response indicates the second mode (e.g., a non-LL mode).

For example, the response may include, in addition to the address, an indication of the determined mode of transmission of the audiovisual content (the first mode in case the user is determined to be eligible to receive the content with the low latency, otherwise the second one). In another example, the address may implicitly indicate the determined mode. In another example, the address directly corresponds to the mode to be used for transmission (e.g., one address is provided for an LL transmission, and a different address is provided for a non-LL transmission).

The response is transmitted to the user who may transmit another request to the address included in the response and obtain the audiovisual content in the mode determined in step S12.

As explained below, the response is transmitted outside the distribution network and can direct the user towards the distribution network. In other words, all three of steps S11, S12 and S13 may be performed prior to any communication between the user and the distribution network related to the audiovisual content. In other words, obtaining the request related to the audiovisual content (S11), determining the eligibility to receive the content with a low latency (S12) and transmitting the response to the request (S13) are carried out in the absence of communication between the user and the distribution network for the audiovisual contents (without excluding the possibility that the distribution network provides data related to other audiovisual content to the same user in parallel).

Preferably, the response indicates one of a first network address associated with the first mode, and a second network address associated with the second mode, wherein the second network address is preferably different from the first network address.

The first address and the second address may be network addresses, such as IP addresses (IPv4 or IPv6). These addresses may be completely different or have a common prefix (e.g., a first IP address 151.230.60.1 and a second IP address 151.230.60.2, have 151.230.60 as a common prefix).

In one example, the two addresses may be jointly located in a same device (i.e., present in the same device) of the distribution network (e.g., a gateway device) that functions as two sources of the audiovisual content, a source for the first distribution mode of the audiovisual content, and a source for the second mode. In one example, the addresses may correspond to different ports of the same IP address (e.g. 151.230.60.1:80 and 151.230.60.1.443).

The two addresses are not necessarily of the same type, for example the first address may be an IPv4 address while the second address may be an IPv6 address or vice versa. Although the examples described refer to IP addresses, any other type of user-accessible network address may be used.

Preferably, the first address and the second address are associated with a same distribution network, i.e. CDN, that provides the audiovisual content. The same CDN prepares the distribution of the audiovisual content in the first mode and in the second mode (for example by generating a list of blocks for the audiovisual content according to the respective distribution mode) and transmits, at the request of the user, the audiovisual content using the mode determined at step S12 of the method.

Preferably, the telemetry data are obtained from the CDN distribution network. Once the user receives an address where an audiovisual content is available, the user comes into contact with the CDN to obtain the blocks that make up the audiovisual content. In particular, while a part of the content is being played by the user, the user requests the blocks of the audiovisual content corresponding to the next part, in order to be able to play the audiovisual content continuously. During this process, a series of content block requests are transmitted to the CDN. Data derived from these user requests and other related transmissions may be collected, and optionally processed to obtain the telemetry data.

Preferably, the audiovisual content is transmitted via a linear streaming channel. In a linear streaming channel, a sequence of audiovisual contents is transmitted in a continuous stream (e.g., an MPEG continuous stream), wherein the blocks of the requested audiovisual content are concatenated with blocks of other audiovisual contents (to be played before and/or after in the sequence of contents).

Preferably, the audiovisual content is a live content. In other words, it can be a content that needs to be aired and therefore streamed with as little latency as possible relative to the time of production of the same program. This live content is like other types of open contents, that is, contents for which, once started, their end is not yet reached or known while the same content is being transmitted; in other words, they have a list of blocks that is generated on the fly, that is, at the time of composing the linear channel, or in other words simultaneously or close in time to the composition of the linear channel itself. Each generated block is added to the list of blocks that the user can request. In such cases, a respective list of blocks of the audiovisual content is generated for the first mode and the second transmission mode, and the user receives blocks from the list corresponding to the determined mode for playing the audiovisual content.

Preferably, the telemetry data are used in a determination of a risk of deterioration in a quality of service, QoS, associated with a transmission of the audiovisual content in the first mode, and wherein the user is determined to be eligible to receive the content in the first of the at least two modes if the risk remains below a certain threshold.

The quality of service can be an indication of the user experience based on factors such as the resolution of the received audiovisual content, and/or an average bitrate (in case of adaptive streaming), and/or a latency in receiving the audiovisual content, etc. In the distribution of audiovisual contents, one or more QoS thresholds to be respected can be defined in order to provide a service appreciated by the users. Since the mode for the transmission of the audiovisual content may affect the QoS, the choice of the mode may take into account an estimated improvement or deterioration (or a risk of deterioration) of the QoS associated with the transmission of the audiovisual content.

If the risk remains below a certain threshold, the user may be considered eligible to receive the audiovisual content in the first mode (i.e. with low latency). Lowering the latency for the user can therefore provide an improvement in the user experience and QoS generally for the audiovisual content distribution service.

Following the described example, the determination in step S12 may be based on a machine learning algorithm, and in particular, on a comparison between a value provided by the machine learning algorithm and a threshold value (e.g. a predetermined or dynamically determined threshold value according to a current value of the QoS). If the threshold indicates a maximum acceptable risk, the user may be determined to be eligible to receive the content with a low latency if the value provided by the machine learning algorithm indicates a lower risk than the threshold.

Preferably, the telemetry data are obtained based on CMCD messages exchanged between the user and a distribution network that provides the audiovisual content.

The CMCD messages are exchanged in connection with the distribution of the audiovisual content, in particular during the initial request for the audiovisual content, and the subsequent transmissions for the blocks of the audiovisual content. For the sake of brevity, here the details about inserting the CMCD messages in the header of a data package that would be obvious to the person skilled in the art are omitted. The user and the distribution network exchange CMCD messages with each other to monitor that the audiovisual content is correctly received and played for the user.

### Figure 2

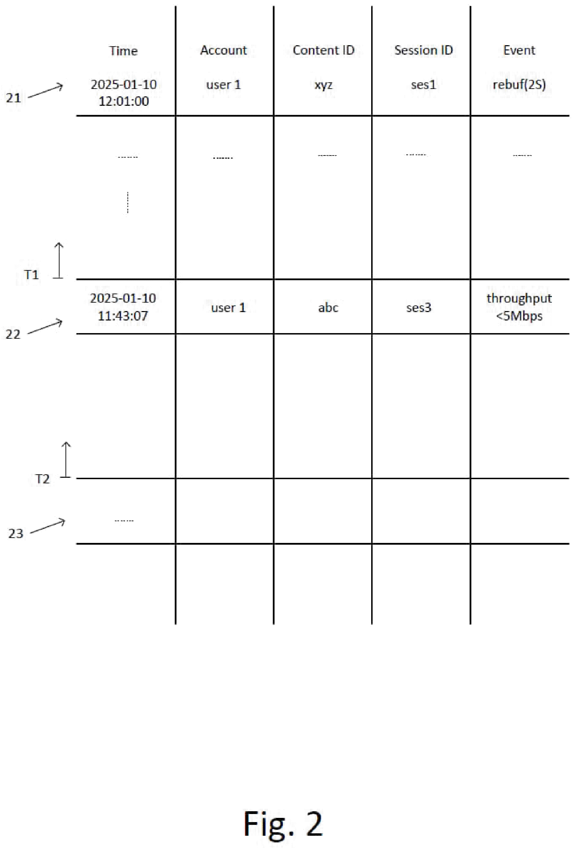

An obtainable example of telemetry data will now be described with reference to figure 2. The telemetry data described in figure 2 is obtainable in step S11 of the method described with reference to figure 1.

In the specific example illustrated in figure 2, a series of events that occurred in the past period are registered. In each item (of this list, in the example), a time information (for example a time instant) is associated with the event, and/or an identifier associated with a user (account), and/or an identifier associated with a content (content ID), and/or an identifier associated with a content distribution session (session ID) and/or an indication of the event (event).

Each item in the table may correspond to a type of event, for example one or more of: an event related to a buffer for the playback of audiovisual contents, in particular rebuffering events; an event of failure in the network or in the connection with the user, an event indicating a condition in the network and/or related to one or more network metrics (for example a current load or traffic level of the network, a change (increase or decrease) in the expected or measured load/traffic level, a throughput associated with a network node, a minimum/maximum communication bandwidth value, etc.).

For example, item 21 corresponds to a rebuffering event with a duration of 2 seconds, indicated in figure 2 as 'rebuf(2s)'. The event registered in item 21 is associated with the time instant 2025.01.10 12:01:00 (it can be for example a time instant in which the rebuffering event was detected or the time instant in which the telemetry data for the event r1 were received from the database), during a session with the identifier 'ses1' in which the user 'user1' obtained the content 'xyz'.

Preferably, the telemetry data include first data and second data, wherein the first data indicate a current condition of the network, and wherein the second data indicate a historical condition of the network.

For example, the telemetry data may be separated into first data related to a period that is immediately past (e.g. the last 15, 30 or 60 minutes) and into second data related to an older/longer past period (e.g. the last 3, 7, 21 days). The older past period may correspond to a plurality of past periods (not necessarily adjacent periods). For example, the periods covering the working days of the three weeks that are immediately past may be considered in order to determine a historical condition of the network for a working day. In a more specific example, in order to determine a historical network condition for a Monday, the periods covering the three immediately past Mondays (e.g. 7, 14, and 21 days before the Monday in question) may be considered as the past period for which the second data are obtained.

In the example of figure 2, the telemetry data at the top of the table are the most recent ones and therefore the items at the top of the table correspond (for example the items higher up than the threshold T1 or the threshold T2) to the first data indicating the current condition of the network, while the items at the bottom of the table correspond to the second data indicating a historical condition of the network.

Preferably, the telemetry data are based on data related to previous requests from the user for audiovisual contents. In this way, the determination can be based on prevailing conditions for the particular user and more accurately estimate if the use of the first mode risks deteriorating the user experience.

Taking the example of the table in figure 2, one can obtain the telemetry data (i.e. the items) that correspond to the user in question and remove the other items or by giving less weight to the items corresponding to other users (for example, the items that do not correspond to the identifier associated with the user).

Preferably, wherein the telemetry data include at least one of:
- data related to one or more associated network metrics; and
- data related to a state of a buffer for the playback of audiovisual contents.

The network metrics indicate the quality and/or the stability of the connection between the distribution network of the audiovisual content and the user. These metrics can be used to estimate a risk of a deterioration in the capacity of the connection (i.e., a deterioration that could occur during the transmission of the content) and then to estimate if the transmission of the audiovisual content in the mode that allows a low latency risks causing an interruption in the playback of the audiovisual content. Examples of user-associated network metrics include those described above, i.e., the load/traffic level, and/or the expected or measured change in load/traffic level, and/or the throughput, etc.

If the communications with the user use the CMCD protocol, different CMCD data can be used to obtain the network metrics, for example CMCD-Request.mtp for a measured throughput, and/or CMCD-Object.tb for a top bitrate, and/or CMCD-Status.rtp for a requested maximum throughput. Other network metrics may be obtained via different CMCD data and/or based on a processing of obtained CMCD data (e.g. by calculating an average, minimum and/or maximum value from the obtained data).

In the table of figure 2, item 22 corresponds to an example of data related to a network metric (throughput). Specifically, item 22 indicates an event where the measured throughput passes below the 5Mbps threshold, referred to as 'throughput < SMbps'. This event is associated with a time instant 2025-01-10 11:43:07, the user 'user1', the audiovisual content 'abc' and the session identifier 'ses3'.

The data related to the state of the buffer for the playback of audiovisual contents may include in particular the rebuffering events described above. These indicate if during past transmissions related to the retrieval of audiovisual contents, the same user has already had an interruption in playback due to a lack of data in the buffer.

If the communications with the user use the CMCD protocol, various CMCD data may be used to obtain the data related to the state of the buffer, for example CMCD-Status.bs (Buffer Starvation) to indicate a lack of data of the audio-visual content in the buffer resulting in an interruption in the playback of the audiovisual content, and/or CMCD-Status.bl (buffer length) to indicate a duration of the part of the audiovisual content available in the buffer for playback, and/or CMCD-Request.dl (Deadline) to indicate a deadline for receiving data of the audiovisual content to avoid risks of problems in the playback of the audiovisual content.

In the example of figure 2, item 21 is an example of the rebuffering event data.

The example of the CMCD is purely illustrative and the invention is not limited to this example. Any other suitable protocol may be used in the communications related to the distribution of streaming contents. In particular, data related to one or more network metrics associated with the user and/or data related to a state of a buffer for the playback of audiovisual contents can be obtained using data exchanged between the user and the network also in such other suitable protocols.

Preferably, the database illustrated in figure 2 registers each detected event that refers to the distribution of audiovisual contents to the users and/or to the state of the communication network between the audiovisual content distributor and the users.

Preferably, the data related to the state of the buffer corresponds to a first time frame that is immediate past and/or the data related to the one or more network metrics correspond to a second time frame, wherein the second time frame comprises the first time frame.

In other words, the first time frame and the second time frame may have the same end (the instant in which the telemetry data are obtained), but the first time frame begins for example after the second time frame. A time frame can also be defined as a time interval or a period. In other words, the first time frame is immediately past because it is a time period that ends at the present instant, that is, a time interval whose end coincides with the present moment and which extends into the past. The second time frame is potentially longer than the first time frame and therefore a frame that is immediately past (since it includes the first time frame) or identical to the first time frame or a more extended time interval. The data related to the state of the buffer correspond to a shorter, more recent period and thus indicate a current state of the buffer, while the data related to the network metric(s) correspond to a longer period and thus they may indicate variations in the current network conditions.

In the example of figure 2, the first time frame may correspond to the interval from the threshold T1 at the top of the table, while the second time frame may correspond to the interval from the threshold T2 at the top of the table. In a specific example, the first time frame may be the last 15 minutes while the second time frame may be the last 60 minutes.

The data below the threshold T2 (and therefore older), such as item 23, can be considered as historical data.

The table of figure 2 may correspond to a subset of the registered events, for example by selecting/extracting from a list of the registered events: the data related to the state of the buffer that are more recent than the threshold T1 and the data related to one or more network metrics that are more recent than the threshold T2 (including the data that are more recent than the threshold T1). Selection (or extraction) can be made based on the respective time information associated with each event.

In other cases, in the case of data not used for determination (e.g., if the data related to the state of the buffer that are older than the threshold T2 are no longer considered relevant), the corresponding items may be ignored during determination or deleted to limit the amount of data stored.

### Figure 3

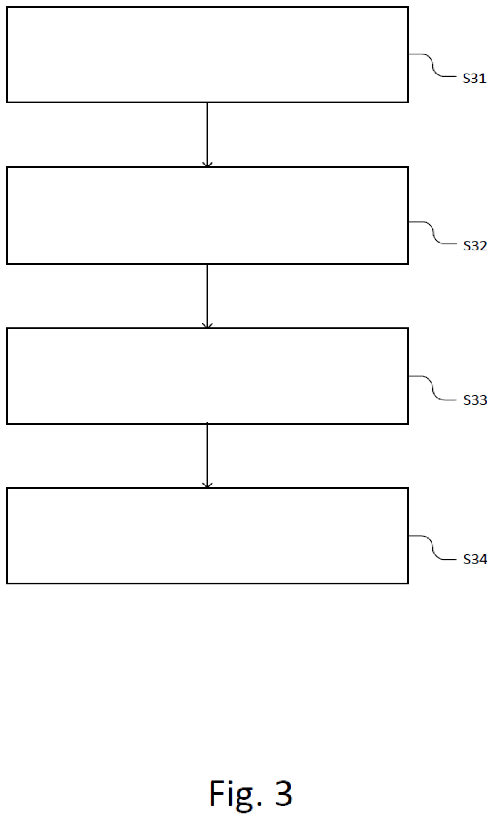

An example of a flowchart of a method will now be described with reference to figure 3.

The method of figure 3 can be implemented in the same context as and/or in parallel with the method of figure 1, in assisting the distribution of audiovisual contents by allowing to choose to which user to provide the audiovisual content with a low latency without a deterioration of the user experience.

The method comprises the step S31 of receiving, from a user, a request related to the audiovisual content, wherein the request includes an identifier associated with a user.

As described above, the request includes the identifier associated with the user, which may be an identifier associated with a device or account of the user or with an identifier of a session for the transmission of the content (session ID) where the session is associated with the user.

In step S31, the request is received from the user. However, the request may be forwarded from one or more intermediaries. However, in the case of figure 3, the intermediaries do not process the request other than to determine where to forward it, for example during a network routing algorithm.

The method comprises the step S32 of transmitting, to a network device, a request for eligibility to receive the audiovisual content with a low latency, wherein the request for eligibility includes the identifier associated with the user.

For example, this request may correspond to the request received in step S11 of figure 1.

The method comprises the step S33 of receiving a response indicating if the user is eligible. In other words, the response may comprise or represent an indication of eligibility to the mode that allows the low latency that is received in response to the request transmitted in step S32.

For example, this response may correspond to the response transmitted in step S13 of figure 3.

The method comprises the step S34 of transmitting to the user a response indicating a network address, wherein the indicated network address is a first address associated with the first mode if the response indicates that the user is eligible to receive the audiovisual content with a low latency, otherwise a second address associated with the second mode.

As explained above, the user can, with the indicated network address, obtain the audiovisual content from the network address. For example, the user may request, from the network address, blocks of audiovisual content to obtain the content in the determined mode.

Preferably, the response to the request for eligibility (received in step S33) is based on the identifier associated with the user and on the telemetry data obtained in a past period.

Preferably, the telemetry data are used in a determination of a risk of deterioration in a quality of service associated with a transmission of the audiovisual content in the first mode, and wherein the user is determined to be eligible to receive the content in the first of the at least two modes if the risk remains below a certain threshold. As explained above, if the risk remains below a certain threshold, the user may be considered eligible to receive the audiovisual content in the first mode (i.e. with low latency). Lowering the latency for the user can therefore instead provide an improvement in the user experience and QoS generally for the audiovisual content distribution service.

### Figure 4

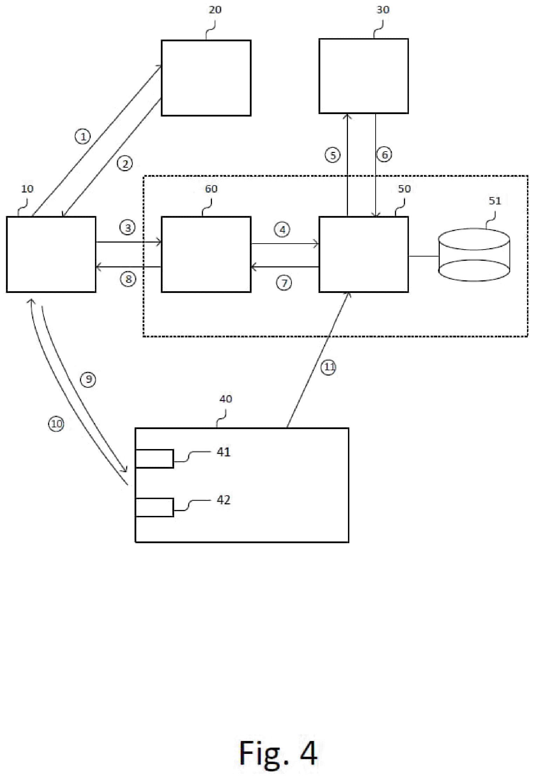

An example of a block diagram of a system will now be described with reference to figure 4.

Figure 4 illustrates a user device 10, a network device 20 for managing audiovisual contents, a network device 30 for managing user identifiers and session identifiers, a distribution network 40, a network device 50 to determine a user's eligibility at low latency, and a network device 60 to direct the user towards the distribution network (thus the network devices 50 and 60 are outside the distribution network 40).

In figure 4, the network device 50 and the network device 60 together represent a system 1 to help the distribution of the audiovisual content. Optionally, the system 1 may also comprise at least one of: the network device 20, the network device 30, the distribution network 40 and the user device 10. Optionally, the system 1 comprises one or more other user devices (not shown) connected to the network devices 20, 60 and to the distribution network 40.

The devices of figure 4 communicate via various communication links. Each communication link may be a wireless communication link such as WLAN/Wi-Fi, a satellite communication link, a mobile data link such as LTE/5G, Bluetooth or Bluetooth Low Energy (BLE), a wired communication link such as DSL, fibre optic cable, Ethernet, etc. Each communication link may be temporary or permanent. The transmission of data relating to the streaming audiovisual content may take place using any suitable transmission protocol, preferably an ABR protocol such as HLS, MPEG-DASH, Smooth Streaming, etc. or a combination thereof. In certain cases, the devices of figure 4 may be connected to each other via a plurality of communication links, for example via a communication network such as the Internet, an Intranet, etc.

The network devices 20, 30, 50, and 60 are configured to communicate with other devices and process data to perform the respective functions. These are depicted in figure 4 as separate elements just to simplify the explanation of the respective functions described below. However, two or more of them may be placed in a same device (i.e., a same network device may combine the functions assigned to two or more network devices 20, 30, 50, and 60).

The user device 10 transmits requests to obtain the audiovisual content. Specifically, the user device 10 communicates with the network device 20 and/or with the network device 60 to obtain a network address (corresponding to the distribution network 40), where the audiovisual content is available.

In one example, the user device 10 may correspond to a user-operated device configured to play the audiovisual content (e.g., a laptop, PC, phone, tablet, television, or other type of user device that includes or is coupled to a screen, a projector, a speaker, or other suitable means for producing the audiovisual content), or a network device associated with the user (e.g., a router or set-top box) configured to forward the received audiovisual content to another user device configured to play the audiovisual content.

The user device 10 must obtain a network address where a user's desired audiovisual content is available.

The user device 10 transmits (figure 4, arrow 1) a request to the network device 20 and includes, in the request, information indicating the desired audiovisual content.

For example, the user device 10 may obtain a list of available audiovisual contents with respective identifiers (e.g., unique identifiers, GUIDs, UUIDs, etc.) associated with each audiovisual content. Such a list may be provided to the user device 10, for example by the network device 20. When the user selects one of the audiovisual contents in the list, the user device 10 transmits a request to the network device 20 with the identifier associated with the selected content.

The network device 20 is configured to receive the request and to determine if the audiovisual content indicated in the request is available in two (or more) distribution modes in which one of the modes allows a low latency.

For example, the network device 20 may maintain, for each audiovisual content provided by the distribution network 40, an indication if the content is available in at least one mode that allows for a low latency. This indication may take on various forms, such as respective associations between an audiovisual content identifier and the mode(s) in which said audiovisual content is distributed, respective associations between an audiovisual content identifier and information (e.g. a Boolean value) indicating if the audiovisual content is available in the two modes, a list of the audiovisual content identifiers available in the two modes, a list of audiovisual content identifiers not available in the two modes, etc. These described forms and other suitable forms of indications, which will be apparent to the person skilled in the art based on the present description, all allow to the device to determine if the content is or is not available for distribution in two different modes.

If the audiovisual content is available in at least one distribution mode that allows for a low latency and at least one other distribution mode, the network device 20 redirects with a response (figure 4, arrow 2) the user device 10 towards the network device 60.

Otherwise, the network device 20 may redirect the user device 10 directly to the distribution network 40 to obtain the audiovisual content in the mode in which the audiovisual content is distributed.

The network device 60 is configured to communicate with the user device 10 and the network device 50.

The user device 10 transmits (figure 4, arrow 3) to the network device 60 a request related to the audiovisual content, wherein the request includes an identifier associated with the user.

For example, the request may include a CMCD-Session.sid message, thus a unique identifier generated by the user device 10 prior to the first request transmitted to the network for the audiovisual content. The CMCD-Session.sid remains the same during all transmissions to obtain the audiovisual content and can therefore be associated with the same user.

The request described with reference to arrow 3 of figure 4 corresponds to the request described with reference to step S31 of figure 3.

The network device 60 transmits (figure 4, arrow 4) a request for eligibility to the network device 50, including in the request the identifier associated with the user, for example the identifier CMCD-Session.sid. This request is to determine if the user device 10 (the user) is eligible to receive the audiovisual content in LL mode.

The request described with reference to arrow 4 of figure 4 corresponds to the request described with reference to step S32 of figure 3, and the request described with reference to step S11 of figure 1.

The network device 50 is configured to receive the request for eligibility and to determine, based on the identifier and telemetry data, if the user is eligible to receive the audiovisual content in the LL mode. The network device is connected to at least one database 51 configured to store the collected telemetry data.

However, in the example illustrated in figure 4, the network device 50 cannot directly associate the identifier transmitted in the request for eligibility with an identifier present in the telemetry data in the database 51, for example because the telemetry data in the database 51 do not include the session identifier CMCD-Session.sid (thus, unlike the example described with reference to figure 2).

The network device 50 transmits a request for identifier mapping, including the identifier in the request for eligibility, to the network device 30 (figure 4, arrow 5).

The network device 30 determines a user identifier that corresponds to the session identifier CMCD-Session.sid (i.e., performs a mapping/translation of the session identifier at the user identifier). For example, before starting a session, the user device 10 must authenticate with the CMCD system. The network device 30 may then obtain the association between the session identifier CMCD-Session.sid and the user identifier based on said authentication.

The network device 30 transmits (figure 4, arrow 6) the user identifier to the network device 50.

The network device 50 determines, based on the user identifier and the telemetry data stored in the database 51, if the user is eligible to receive the content with a low latency.

This determination corresponds to the determination described with reference to step S12 of figure 1.

The network device 50 transmits a response to the request for eligibility (figure 4, arrow 7), to the network device 60. In the response, the network device 50 indicates if the user is eligible to receive the audiovisual content in LL mode.

The response described with reference to arrow 7 of figure 4 corresponds to the transmission described with reference to step S33 of figure 3, and the transmission described with reference to step S13 of figure 1.

The network device 60 determines a network address 41 associated with the LL mode, if the response to the request for eligibility indicates that the user is eligible to receive it. Otherwise, it will determine a network address 42 associated with the non-LL mode. The network device 60 transmits to the user device 10 (figure 4, arrow 8) a response that includes the determined network address.

The user device 10 then communicates with the distribution network 40 (figure 4, arrows 9 and 10), and specifically with the received network address (41 for LL mode or 42 for non-LL mode) to obtain the audiovisual content.

Since the modes are associated with different addresses, the distribution network 40 may determine in which mode to transmit the audiovisual content to the user device 10 based on the address at which the communications transmitted by the user device 10 are received, even if the mode is not explicitly specified in the request of the user device 10.

During communications between the user device 10 and the distribution network 40, different data are exchanged. These data include telemetry data (e.g., CMCD messages) that the distribution network 40 forwards to the network device 50 (figure 4, arrow 11) to store them in the database 51 for later use in the determinations of LL mode eligibility for future requests.

In summary, the network device 50 may perform all steps of the method described with reference to figure 1 and the network device 60 may perform all steps of the method described with reference to figure 3.

Preferably, the at least two modes are modes for transmission and/or distribution of audiovisual streaming content. In other words, these are configurations for the transmission of audiovisual content and the same modes can be used for a plurality of different audiovisual contents.

Preferably, said at least two modes are configured independently of the audiovisual content.

Preferably, the first mode is associated with a division of the audiovisual content into a plurality of first blocks and the second mode is associated with a division of the audiovisual content into a plurality of second blocks, wherein each second block has a longer duration than a respective first block.

In this way, the first blocks of the content can be transmitted to the user faster, lowering latency.

Preferably, each first block has a duration of less than one second, preferably 500 milliseconds or less. In this way, less than one second after capturing or generating the live or streaming content, the block can be generated and made available for transmission, thus limiting latency. In other words, each first block corresponds to a part of the content of less than one second.

Preferably, each second block has a duration of more than one second, preferably 2 seconds or more. Thus, when a second block is received from the user, a buffer of at least 2 seconds can be obtained to ensure that the next second block is received and processed in time to avoid or minimize an interruption in the playback of the audiovisual content.

### Figure 5

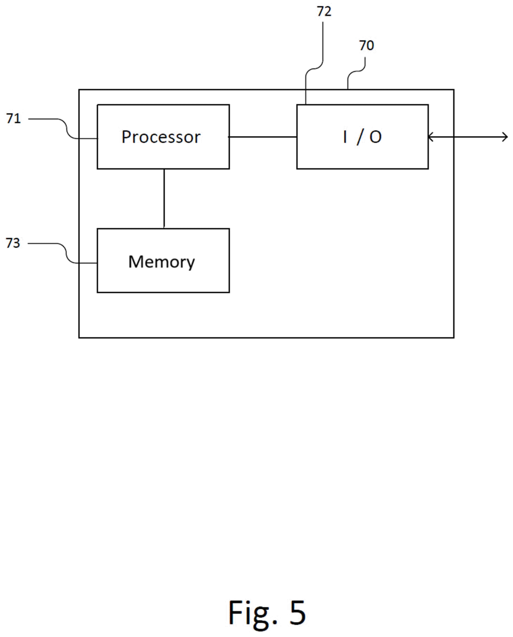

An example of a block diagram of a network device 70 will now be described with reference to figure 5.

Any one of the network devices 20, 30, 50, or 60, any combination thereof, or the user device may be implemented in the form of the network device 70.

In one embodiment, the network device 70 includes at least one data processor 71, an I/O interface 72, and a memory 73. The interface 72 receives and transmits data from different devices, e.g., one or more of the devices illustrated in figure 4 (the user device 10 and the network devices 20, 30, 50, and/or 60).

The processor 71 is configured to execute instructions comprised in a computer program stored in the memory 73. In executing the instructions, the processor 72 executes the method steps according to figure 1 and/or the method steps according to figure 3, and controls the interface during data transmission/reception according to the method steps, as described above. The memory 73 is configured to store the computer program and may also store additional information, such as the respective indication for each audiovisual content provided by the distribution network 40, if the content is available in at least one mode that allows for a low latency, the database 51 by including the telemetry data, the mapping data between the session identifier and the user identifier (or other examples of mappings between identifiers associated with the user), the data related to the determination of eligibility, such as various threshold values used to determine if the user is eligible to receive the content at low latency, data for performing one or more artificial intelligence and/or machine learning algorithms, data for training such algorithms (e.g., a training module and a database with training data), data related to the network address associated with each mode (i.e., first address and second address), etc.

### MODIFICATIONS AND VARIATIONS

Although in the example of figure 2, the telemetry data include a number of different information for each registered event, it is understood that the telemetry data are not limited to this specific example. In some cases, less information may be collected for each item, for example by registering, for each event, only one between the user identifier and the session identifier and/or only one between the session identifier and the content identifier. In other cases, additional information may be collected for each item, e.g. data indicating the link or links used to communicate with the user (as it may help identify if a problem occurs on a specific link and determine all involved users), data indicating one or more blocks of an audiovisual content (e.g. a block associated with a transmission from the user or from the distribution network based on which the event was registered), etc. In some cases, the information registered for one item may be different from the information registered for another item. For example, the information registered may depend on the type of event corresponding to the item: for a network metric event, a content, user, session identifier may not be registered, etc. In certain cases, the different types of events may be registered separately (for example in a respective table for each type of event). The form in which telemetry data are registered is not limited to one or more tables. In fact, any other suitable form can be used to associate the telemetry data obtained with each other.

Although in the example described above with reference to figure 3, the response transmitted to the user indicates different network addresses depending on if the user is eligible to receive the audiovisual content with a low latency or not, a person skilled in the art will understand that, alternatively, the response could indicate in addition to the address, an indication of the determined mode (the first mode if the user is eligible or the second mode if the user is not eligible to receive the content with a low latency). In such a case, the network address may be the same regardless of the determined mode.

In some cases, the network device 20, described with reference to figure 4, and the associated functions may be omitted (with omission of the operations associated with arrows 1 and 2 on figure 4), because no case differentiation is needed, for example if the distribution network 40 is configured to provide all audiovisual contents in at least two modes, with at least one mode allowing for a low latency. In these cases, the user device 10 may directly communicate with the network device 60.

In certain cases, the network device 50, described with reference to figure 4, may control both the database 51, to register the session identifier CMCD-Session.sid, and the user identifier received from the network device 30, in association with each other. In this way, if the network device 50 receives a second request for eligibility, which includes the same session identifier, the network device 50 may directly determine the user corresponding to the CMCD-Session.sid.

In some cases, the network device 30, described with reference to figure 4, and the associated functions may be omitted (with the omission of the operations associated with the arrows 5 and 6 on figure 4), because a mapping of the identifier associated with the user is not needed. For example, the telemetry data may already include the identifier associated with the user present in the request transmitted by the user device 10. In these cases, the network device 50 may directly determine which telemetry data are relevant to the received request for eligibility, with no need for a mapping.

In other cases, the network device 60, described with reference to figure 4, may transmit the request for mapping directly to the network device 30 and then transmit the request for eligibility using the identifier associated with the user known to the network device 50. In such cases, the network device 50 does not require a connection to the network device 30.

In other cases, network device 60 or network device 50, described with reference to figure 4, may include the functions associated with network device 30, internally processing a mapping between one identifier (e.g., CMCD-Session.sid) and another (e.g., a user ID), thereby avoiding transmissions between network devices associated with arrows 5 and 6 on figure 4.

In light of the above explanation, various aspects of the invention may be realized by a computer program comprising instructions arranged to execute, when said program is executed on one or more data processors, the method according to one of the aspects described above.

Many of the embodiments and examples have been discussed with reference to a method. However, what has been described may also be described or implemented in a corresponding device (or entity), and/or in a computer program to be executed on a processing entity (e.g. a computer) or on an entity whose means are suitably configured. The device (or the entity) may be implemented in a single apparatus, via hardware (HW), software (SW) or combination thereof, or on multiple interconnected units or apparatuses (also HW, SW or combination thereof). Each of the elements described herein is intended to be realized by any combination of software and/or hardware, in a localized manner on one device or distributed across multiple devices. Naturally, the description set forth above of embodiments and examples applying the principles recognised by the inventors is provided solely for the purpose of illustrating such principles and must thus not be understood as limiting the scope of protection of the invention claimed herein.

## Claims

1. Method for distributing an audiovisual streaming content in at least two modes via a communication network, wherein a first mode of the at least two modes allows a low latency relative to a second mode of the at least two modes, wherein the method comprises the steps of:
obtaining (S11) a request related to the audiovisual content from a user, wherein the request includes an identifier associated with a user;
determining (S12), based on the identifier associated with the user and telemetry data obtained in a past period, if the user is eligible to receive the content with a low latency; and
transmitting (S13) a response to the request, the response indicating an address where the audiovisual content is available, in which:
in case the user is determined to be eligible to receive the content with the low latency, the response indicates the first mode, and
otherwise, the response indicates the second mode.

2. Method according to claim 1, wherein the telemetry data are used in a determination of a risk of deterioration in a quality of service associated with transmission of the audiovisual content in the first mode, and wherein the user is determined to be eligible to receive the content in the first of the at least two modes if the risk remains below a certain threshold.

3. Method according to claim 1 or 2, wherein the telemetry data include first data and second data, wherein the first data indicate a current condition of the network, and wherein the second data indicate a historical condition of the network, and/or
wherein the telemetry data are based on data related to previous requests from the user for audiovisual contents.

4. Method according to any one of the preceding claims, wherein the telemetry data include at least one of:
- data related to one or more network metrics associated with the user; and
- data related to a state of a buffer for the playback of audiovisual contents.

5. Method according to claim 4, wherein the data related to the state of the buffer correspond to a first time frame that is immediate past and/or the data related to the one or more network metrics correspond to a second time frame, wherein the second time frame comprises the first time frame.

6. Method according to any one of the preceding claims, wherein the audiovisual content is transmitted via a linear streaming channel, wherein preferably the audiovisual content is a live content.

7. Method according to any one of the preceding claims, wherein the address corresponds to a distribution network in which the audiovisual content is available in said at least two modes.

8. Method according to any one of the preceding claims, wherein the response directs the user towards a distribution network in which the audiovisual content is available in said at least two modes.

9. Method according to claim 8 wherein the response is transmitted outside the distribution network.

10. Method according to any one of the preceding claims, wherein:
the response indicates one of a first network address associated with the first mode, and a second network address associated with the second mode, wherein the second network address is different from the first network address.

11. Method according to claim 10, wherein the first address and the second address are associated with a same distribution network that provides the audiovisual content,
wherein, preferably, the telemetry data are obtained from the distribution network.

12. Method according to any one of the preceding claims, wherein the telemetry data are obtained based on Common Media Client Data, CMCD, messages exchanged between the user and a distribution network that provides the audiovisual content.

13. Method for distributing an audiovisual streaming content available in at least two modes via a communication network, wherein a first mode of the at least two modes allows a low latency relative to a second mode of the at least two modes, wherein the method comprises the steps of:
receiving (S31) from a user, a request related to the audiovisual content, wherein the request includes an identifier associated with a user;
transmitting (S32), to a network device, a request for eligibility to receive the audiovisual content with a low latency, wherein the request for eligibility includes the identifier associated with the user;
receiving (S33) a response indicating whether the user is eligible;
transmitting (S34) to the user a response indicating a network address, wherein the indicated network address is:
a first address associated with the first mode if the response indicates that the user is eligible to receive the audiovisual content with a low latency, or
a second address associated with the second mode otherwise.

14. Network device (50) for distributing an audiovisual streaming content in at least two modes via a communication network, wherein a first mode of the at least two modes allows a low latency relative to a second mode of the at least two modes, wherein the device comprises:
an interface configured to obtain a request related to the audiovisual content from a user, wherein the request includes an identifier associated with a user; and
a controller configured to determine, based on the identifier associated with the user and telemetry data obtained in a past period, if the user is eligible to receive the content with a low latency;
wherein the interface is configured to transmit a response to the request, the response indicating an address where the audiovisual content is available, wherein:
in case the user is determined to be eligible to receive the content with the low latency, the response indicates the first mode, and
otherwise the response indicates the second mode.

15. Network device for distributing an audiovisual streaming content available in at least two modes via a communication network, wherein a first mode of the at least two modes allows a low latency relative to a second mode of the at least two modes, wherein the device comprises:
an interface for communicating with a user and with a second network device, wherein the interface is configured to:
receive from a user, a request related to the audiovisual content, wherein the request includes an identifier associated with a user;
transmit, to the second network device, a request for eligibility to receive the audiovisual content with a low latency, wherein the request for eligibility includes the identifier associated with the user;
receive a response indicating if the user is eligible; and
transmit to the user a response indicating a network address,
wherein the indicated network address is:
a first address associated with the first mode if the response indicates that the user is eligible to receive the audiovisual content with a low latency, or
a second address associated with the second mode otherwise.
